# EUROPEAN PATENT APPLICATION

(11) **EP 4 711 162 A1**
(43) Date of publication of application: **18.03.2026**
(21) Application number: 23941562.3
(22) Date of filing: 14.06.2023
(51) Int. Cl.: B60J 1/00

(54) **VEHICLE WINDSHIELD**

(71) Applicant: HONDA MOTOR CO., LTD., Tokyo 105-8404 (JP)
(72) Inventor: YAMAGUCHI, Hiroshi, Tokyo 107-8556 (JP)
(74) Representative: Kiwit, Benedikt
(86) International application number: PCT/JP2023/022055
(87) International publication number: WO 2024/257257

(57) **Abstract**

A vehicle windshield includes a windshield body and a sensory guide. The sensory guide is disposed in a lower area of the windshield body and allows a driver to sense a relative position of a vehicle with respect to an outside surroundings. The sensory guide has an upper side which extends along a vehicle width direction. The upper side of the sensory guide is provided such that when the upper side overlaps with a lane on a road surface seen from the driver, the length is longer than the width of the lane in the vehicle width direction.

## Description

### TECHNICAL FIELD

The present invention relates to a vehicle windshield.

### BACKGROUND ART

As a technology for easily recognizing a traveling position of an own vehicle by a driver who visually recognizes the front through a windshield, there is known one in which a sensory guide (sensory mark) is provided on a windshield (for example, see Patent Document 1).

In the windshield described in Patent Document 1, a recess that is recessed downward is provided at a lower edge of a black border (e.g., black ceramic dots) placed on an outer periphery of a windshield body, and a circular sensory mark is provided with a gap inside the recess. In the case of this windshield, a driver can easily grasp a traveling position of an own vehicle by visually recognizing the sensory mark and the target in the forward field of view together.

### Citation List

### Patent Document

Patent Document 1: Japanese Unexamined Patent Application, First Publication No. 2017-39384

### SUMMARY OF INVENTION

### Technical Problem

However, since the windshield described in Patent Document 1 has a small, round, sensory mark placed inside a recess formed in the border, the driver while driving the vehicle may typically focus their attention on the sensory mark surrounded by the recess. Then, when the sensory mark was small and round, the driver may have typically been more conscious of aligning the sensory mark with the target while driving.

Therefore, an object of the present invention is to provide a vehicle windshield that allows a driver to naturally grasp the positional relationship between an own vehicle and a road without any discomfort. As such, the present invention will ultimately contribute to energy efficiency in the field of vehicle safety technology.

### Solution to Problem

A vehicle windshield according to an aspect of the present invention includes: a windshield body; and a sensory guide which is disposed in a lower area of the windshield body and allows a driver to sense a relative position of a vehicle with respect to an outside surroundings, wherein the sensory guide has an upper side which extends along a vehicle width direction, and wherein the upper side is provided such that when the upper side overlaps with a lane on a road surface seen from the driver, the length is longer than the width of the lane in the vehicle width direction.

With the above-described configuration, the driver can drive the vehicle while recognizing the relative position of the sensory guide, such as whether the upper side of the sensory guide overlaps or coincides with the lane on the road surface. Accordingly, since it becomes easier to drive the vehicle while maintaining an almost constant distance from the lane, it is possible to prevent the deviation, wobbling, or the like of the vehicle within its own lane and to enable stable vehicle driving. Since the length of the upper side of the sensory guide is set to be longer than the width of the lane seen from the driver, the driver is not forced to stare at a point on the sensory guide and operate the handle to aim at the target. Since the driver can drive the vehicle stably while keeping the positional relationship between the sensory guide and the lane in his or her field of view while driving as usual, the driver is less likely to feel fatigued.

The sensory guide may have lateral sides which extend downward from both ends in the vehicle width direction of the upper side, and the lateral sides may be inclined such that the length in the vehicle width direction gradually increases downward from the end of the upper side.

In this case, when the lane on the road surface overlaps with the lateral side of the sensory guide while the vehicle is being driven, the amount of deviation from the reference area where the lane and the upper side of the sensory guide overlap can be intuitively grasped from the change in height of the overlapping portion of the lateral side and the lane. Since the change in the amount of deviation that can be recognized while driving and the change in the scenery seen through the passenger side mirror are linked, when this configuration is adopted, the driver can properly judge the direction and amount of handle correction by also visually recognizing the passenger side mirror.

The maximum length in the vehicle width direction of the lateral sides arranged on both sides of the upper side in the vehicle width direction may be set to half the length of the upper side.

In this case, since the length in the vehicle width direction from the reference area where the upper side overlaps with the lane to the lower end of the lateral side is half the maximum adjustment width within the reference area (the length in the vehicle width direction of the upper side), it becomes easier for the driver to intuitively grasp the amount of deviation from the reference area.

Further, since the widthwise lengths of the two lateral sides arranged on both sides of the upper side in the vehicle width direction are the same, the sensory guide appears visually stable and is less likely to give a sense of discomfort to the driver who visually recognizes the sensory guide.

Further, since the length of the lateral side that allows the driver to recognize the amount of deviation from the reference area (upper side area) is ensured to be sufficiently long (half the length of the maximum adjustment width within the reference area), the driver who visually recognizes the sensory guide is less likely to be conscious of hastily trying to align the upper side of the sensory guide with the lane. Therefore, the driver can naturally correct the handle while still being able to naturally and visually recognize the forward field of view.

The height from a lower end to an upper end of the lateral side may be set to be equal to or smaller than the maximum length of the lateral side in the vehicle width direction.

In this case, since two lateral sides arranged on both sides of the upper side in the vehicle width direction rise gently (at a non-acute angle) toward the upper side, it is less likely that the driver who visually recognizes the sensory guide will be conscious of hastily trying to align the upper side of the sensory guide with the lane. Therefore, the driver can naturally correct the handle while still being able to visually recognize the forward field of view.

The sensory guide may be disposed such that a center position of the sensory guide in the vehicle width direction coincides with a center position of the vehicle in the vehicle width direction.

In this case, the driver can recognize the center position of the own vehicle in the vehicle width direction from the center position of the upper side by visually recognizing the upper side of the sensory guide. Therefore, the driver can operate the handle while being conscious of the center of the own vehicle in the vehicle width direction.

Further, since the upper side of the sensory guide extends to the left and right by the same length from the center position of the vehicle in the vehicle width direction, the left and right deviation of the own vehicle can be adjusted within the same length range.

The sensory guide may be disposed such that the upper side is located above an upper edge of a front hood portion of the vehicle seen from the driver through the windshield body.

Furthermore, the "upper edge of the front hood portion of the vehicle seen from the driver" means the upper edge of the front hood portion of the vehicle as seen from the eyepoint of an adult driver having a standard body shape seated in the driver's seat.

When the upper side of the sensory guide overlaps with the front hood portion as viewed from the driver, the intersection of the upper side and the lane on the road surface is blocked by the front hood portion. In contrast, in this configuration, since the upper side of the sensory guide is located above the upper edge of the front hood portion, the intersection of the upper side and the lane on the road surface is not blocked by the front hood portion. Therefore, the driver can accurately grasp the positional relationship between the lane on the road surface and the own vehicle based on the overlapping position of the upper side of the sensory guide and the lane on the road surface.

Further, when the vehicle's headlights are turned on, the road surface appears brightly illuminated through the windshield body. At this time, since the intersection between the upper side of the sensory guide and the lane on the road surface is not blocked by the front hood portion, the driver can clearly recognize the positional relationship between the upper side and the brightly lit lane.

A peripheral edge portion of the windshield body may be provided with a border which frames the peripheral edge portion, and the sensory guide may be provided to be continuous with the border.

In this case, since the sensory guide and the border are connected, the sensory guide floats within the windshield body and becomes invisible. Therefore, when this configuration is adopted, the driver will not feel any discomfort as if a foreign object is attached, and comfort when driving the vehicle can be improved. Advantageous Effects of Invention

In the vehicle windshield according to the present invention, the upper side of the sensory guide is provided such that when the upper side overlaps with a lane on a road surface seen from the driver, the length is longer than the width of the lane in the vehicle width direction. This is to take into consideration the shape of the sensory guide to prevent the driver from staring at the sensory guide and also to allow for flexible response to multiple road width standards such that the sensory guide can be used as a guideline for stable driving. Therefore, the driver only needs to operate the handle to maintain an almost constant positional relationship between the sensory guide and the lane, such as by keeping the lane within the range of the upper side of the sensory guide, which is longer in the vehicle width direction from the driver's line of sight, or by aligning the lane along the side of the upper side. Accordingly, when the vehicle windshield of the present invention is adopted, the driver can naturally grasp the positional relationship between the own vehicle and the road without any discomfort.

Therefore, the vehicle windshield according to the present invention can contribute to energy efficiency in the field of vehicle safety technology.

### BRIEF DESCRIPTION OF DRAWINGS

[FIG. 1] A diagram showing a vehicle according to an embodiment as viewed from the interior of the vehicle facing forward with a forward field of view seen from a driver superimposed thereon.
[FIG. 2] A diagram showing a positional relationship between a sensory guide and a front hood portion of the embodiment.
[FIG. 3] A diagram showing an appearance example of the sensory guide of the embodiment and a lane on a road surface.
[FIG. 4] A front view of a part of a sensory guide of a modified example.
[FIG. 5] A diagram showing another appearance example of the sensory guide of the embodiment and the lane on the road surface.
[FIG. 6] A diagram showing still another appearance example of the sensory guide of the embodiment and the lane on the road surface.
[FIG. 7] A diagram showing still another appearance example of the sensory guide of the embodiment and the lane on the road surface.

### DESCRIPTION OF EMBODIMENTS

Hereinafter, an embodiment of the present invention will be described with reference to the drawings. Furthermore, in the following description, the front, rear, up, down, left, and right refer to the front, rear, up, down, left, and right of a vehicle 1 facing forward.

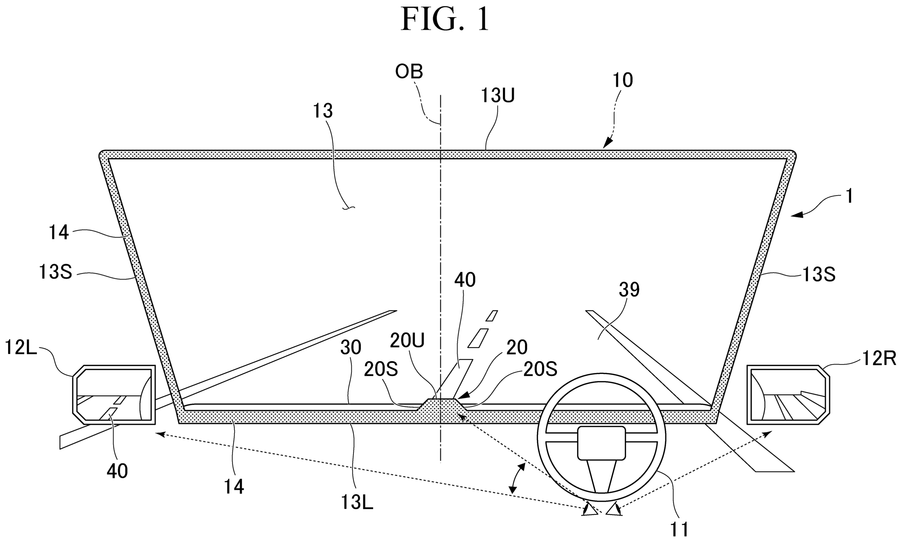

FIG. 1 is a diagram showing the vehicle 1 according to this embodiment as viewed from the interior of the vehicle facing forward with a forward field of view seen from a driver superimposed thereon.

In FIG. 1, 10 denotes a windshield disposed in front of a driver's seat, 11 denotes a steering wheel disposed in front of the driver's seat, and 12L and 12R denote left and right side mirrors. The windshield 10 is formed in a horizontally long rectangular shape when viewed from the front.

The windshield 10 includes a windshield body 13 which is made of transparent tempered glass or the like and a border 14 which is made of black ceramic dots printed on the outer peripheral border of the windshield body 13. The border 14 is provided for the purposes of concealing an adhesive portion of the windshield 10 attached to a vehicle body and for the purposes of blocking light. The border 14 is provided on a lower edge portion 13L, an upper edge portion 13U, and left and right side edge portions 13S of the windshield body 13.

Furthermore, the border 14 is not limited to black ceramic dots. The border 14 is located on the outer peripheral edge portion of the windshield body 13 and may be made of any material or installed by any method as long as the border can block part of the forward field of view from the interior of the vehicle.

A sensory guide 20 for allowing the driver to recognize the relative position of the vehicle 1 with respect to the outside surroundings is provided at the center position in the vehicle width direction of the lower edge portion 13L (lower area) of the windshield body 13. The sensory guide 20 is formed to be continuous with the border 14 of the lower edge portion 13L by, for example, the same method as the border 14 (for example, a method of printing black ceramic dots). However, the sensory guide 20 may also be provided on the windshield body 13 using a method separate from the border 14.

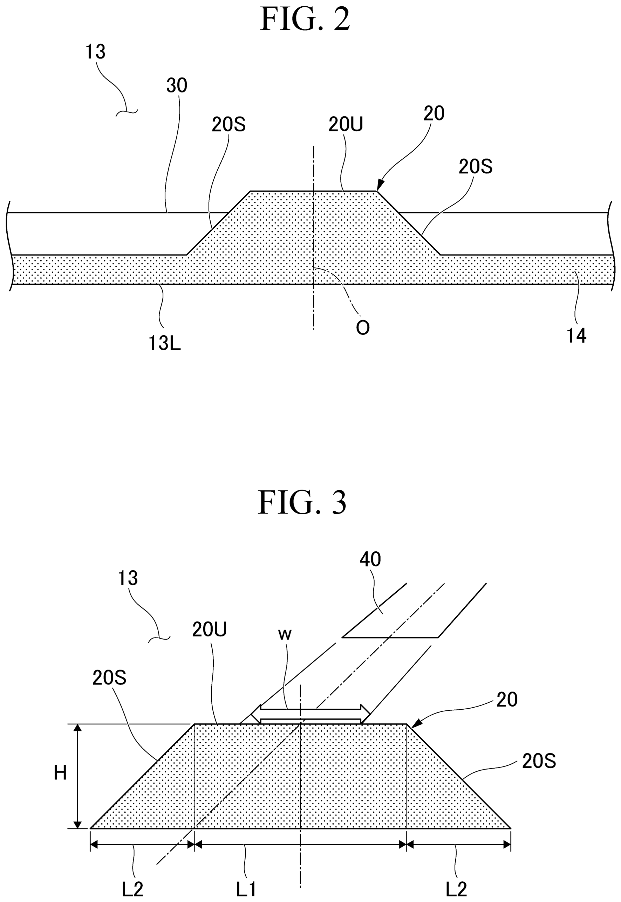

FIG. 2 is a diagram showing a positional relationship between the sensory guide 20 and the front hood portion 30 of the vehicle 1, and FIG. 3 is a diagram showing an appearance example of the sensory guide 20 and a lane 40 on a road surface 39.

As shown in FIGS. 2 and 3, the sensory guide 20 of this embodiment is formed in an isosceles trapezoid shape in which an upper side 20U is shorter than a lower side. The sensory guide 20 has the upper side 20U extending substantially along the vehicle width direction, and a pair of lateral side 20S extending downward from each of the left and right ends of the upper side 20U and inclined outward in the vehicle width direction. The lower end (lower side) of the sensory guide 20 is connected to the upper surface of the lower edge border 14.

In this embodiment, the upper side 20U of the sensory guide 20 extends substantially horizontally in the vehicle width direction. However, the upper side 20U does not necessarily have to be substantially horizontal, and may be entirely or partially inclined, or may partially have a shape with a non-linear portion.

The length L1 of the upper side 20U of the sensory guide 20 is set to the following length.

That is, when the driver sitting in the driver's seat sees the road surface 39 ahead through the windshield body 13, the length L1 of the upper side 20U is longer than the width w of the lane 40 in the vehicle width direction when the upper side 20U overlaps with the overlapping lane 40 on the road surface 39 seen from the driver. In this embodiment, the length L1 of the upper side 20U is twice the width w of the lane 40 that appears to overlap with the upper side 20U.

Here, the "lane 40 on the road surface 39 seen from the driver" refers to the lane located on the left and right opposite sides of the driver's seat of the vehicle 1, and in the case of a so-called right-hand drive vehicle in which the driver's seat is located on the right side, the lane is located on the left side of the vehicle 1. In the case of a so-called left-hand drive vehicle in which the driver's seat is located on the left side, the lane 40 is the lane located on the right side of the vehicle 1.

The actual width of the lane 40 on the road surface 39 is about 150 mm, but when the width is actually seen to overlap with the upper side 20U of the sensory guide 20 on the windshield body 13, the width appears to be about 15 mm, which is about one-tenth of the width. For this reason, the length of the upper side 20U of the sensory guide 20 of this embodiment is set to, for example, 30 mm.

The left and right lateral sides 20S of the sensory guide 20 are inclined such that the length in the vehicle width direction gradually increases downward from the end of the upper side 20U. The maximum length L2 of each lateral side 20S in the vehicle width direction is set to half the length of the upper side 20U (for example, 15 mm). Further, the height H from the lower end to the upper end of the lateral side 20S is the same as the maximum length L2 of the lateral side 20S in the vehicle width direction (for example, 15 mm). Therefore, the angle between the upper side 20U and each of the left and right lateral sides 20S is set to 135°.

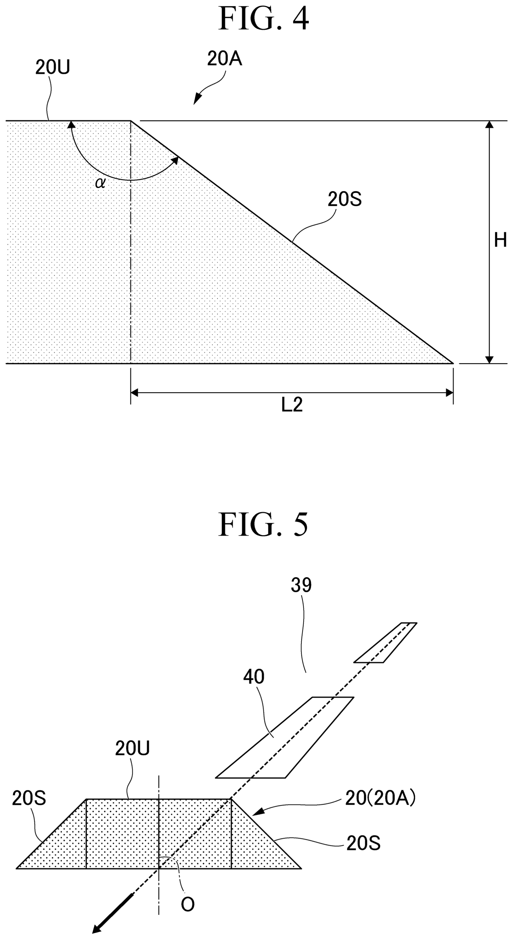

FIG. 4 is a front view showing a part of a sensory guide 20A of a modified example of this embodiment.

In the sensory guide 20A of this modified example, the height H from the lower end to the upper end of the lateral side 20S is set to be lower than the maximum length L2 of the lateral side 20S in the vehicle width direction. Therefore, the angle α between the upper side 20U and each of the left and right lateral sides 20S is set to an angle that satisfies 135°<α<180°.

Further, the sensory guide 20 of this embodiment is installed such that the center position o of the sensory guide 20 in the vehicle width direction coincides with the center position OB (FIG. 1) of the vehicle 1 in the vehicle width direction. Therefore, the upper side 20U and the left and right lateral sides 20S of the sensory guide 20 are line-symmetrical with respect to a vertical line passing through the center position OB in the vehicle width direction of the vehicle 1 (the center position in the vehicle width direction of the windshield body 13). That is, the upper side 20U and the left and right lateral sides 20S extend in equal lengths in both left and right directions from the center position OB in the vehicle width direction of the vehicle 1.

Further, as shown in FIG. 2, the sensory guide 20 is formed such that the upper side 20U is located above the upper edge of the front hood portion 30 of the vehicle 1 that is seen from the driver through the windshield body 13. However, in this case, the "upper edge of the front hood portion 30 of the vehicle 1 seen from the driver" means the upper edge of the front hood portion 30 of the vehicle 1 as seen from the perspective an adult driver having a standard body shape seated in the driver's seat.

As described above, the windshield 10 of this embodiment is configured such that when the upper side 20U of the sensory guide 20 overlaps with the lane 40 on the road surface 39 seen from the driver while the driver is driving the vehicle, the length L1 of the upper side 20U is longer than the width w of the lane 40 in the vehicle width direction. This is to take into consideration the shape of the sensory guide 20 to prevent the driver from staring at the sensory guide and also to allow for flexible response to multiple road width standards such that the sensory guide can be used as a guideline for stable driving. Therefore, the driver can drive the vehicle 1 while maintaining an almost constant distance from the lane 40 by operating the handle such that the upper side 20U of the sensory guide 20 overlaps with or coincides with the lane 40 on the road surface 39. Specifically, the driver can adjust the position of the own vehicle naturally without any discomfort while driving the vehicle 1 by operating the handle such that the lane 40 fits within the range of the upper side 20U of the sensory guide 20, which is longer than the width of the lane 40 from the driver's line of sight or is aligned closely to the upper side 20U.

Here, the actual appearance of the sensory guide 20 and the lane 40 from the driver while driving the vehicle, and the driver's handle operation at that time will be described with reference to FIGS. 3, 5, 6, and 7.

FIGS. 3, 5, 6, and 7 are diagrams showing appearance examples of the sensory guide 20 and the lane 40 from the driver. Furthermore, in these examples, the vehicle 1 is a right-hand drive vehicle with the driver's seat located on the right side, and the driver drives while being conscious of maintaining a predetermined distance from the lane 40 to the left of the vehicle 1.

As shown in FIG. 3, when the lane 40 on the left side of the vehicle 1 is located at the center position of the upper side 20U of the sensory guide 20 from the driver's line of sight, the vehicle 1 is maintaining an optimal distance from the lane 40. While the vehicle 1 is traveling, the lane 40 on the left side of the vehicle 1 appears to be projecting radially from a distance toward the upper side 20U of the sensory guide 20 at the center of the windshield 10 in the vehicle width direction. Further, at this time, as shown in FIG. 3, the width of the left lane 40 appears to gradually increase as the lane approaches the upper side 20U of the sensory guide 20.

The driver who drives the vehicle operates the handle such that the lane 40 fits within the range of the upper side 20U of the sensory guide 20 when viewed forward through the windshield 10 while checking the distance between the own vehicle and the lane 40 in a side mirror 12L on the left side of the vehicle.

As shown in FIG. 5, when the lane 40 on the left side of the vehicle 1 is deviated to the vicinity of the end of the upper side 20U of the sensory guide 20 from the driver's line of sight, the vehicle 1 maintains a distance from the lane 40 within the allowable error range. At this time, the driver can recognize that the own vehicle 1 has been slightly deviated to the opposite side of the lane 40. In response to this, the driver can gently correct the handle such that the lane 40 fits within the center area of the upper side 20U of the sensory guide 20.

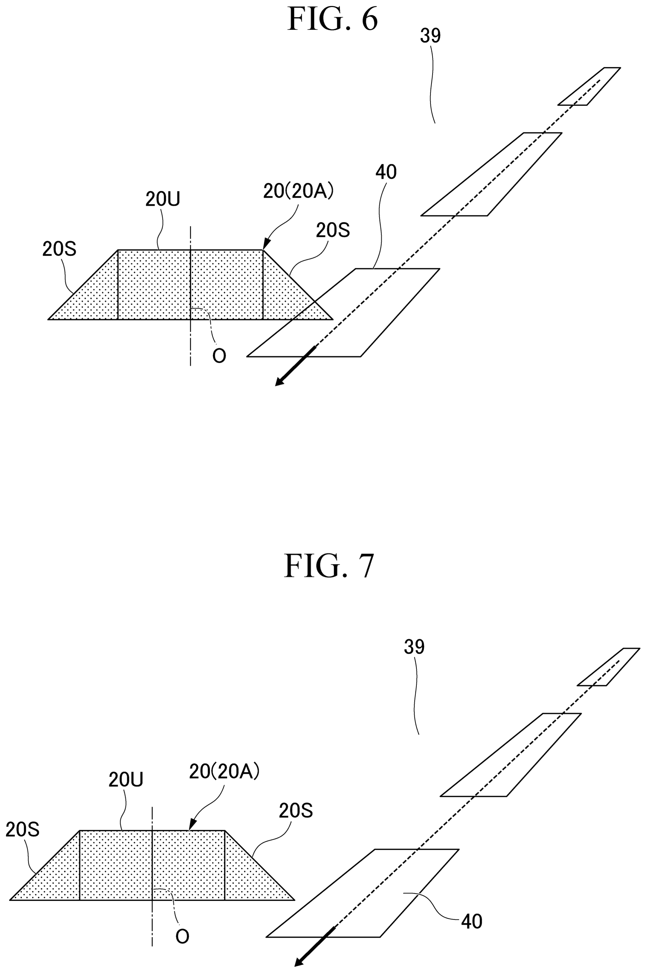

As shown in FIG. 6, when the lane 40 on the left side of the vehicle 1 is located at a position where the lane overlaps with only one lateral side 20S of the sensory guide 20 from the driver's line of sight, the left-right positional relationship between the vehicle 1 and the lane 40 is slightly beyond the allowable error range. At this time, the driver can recognize that the vehicle has been deviated from the allowable error range by an amount corresponding to the overlap position of the lateral side 20S and the lane 40. In response to this, the driver can correct the handle such that the lane 40 fits within the range of the upper side 20U of the sensory guide 20.

Further, as shown in FIG. 7, when the lane 40 on the left side of the vehicle 1 is located away from one lateral side 20S of the sensory guide 20 from the driver's line of sight, the left-right positional relationship between the vehicle 1 and the lane 40 greatly exceeds the allowable error range. At this time, from the positional relationship between the side edge 20S seen through the windshield 10 and the lane 40, the driver can recognize that the own vehicle has been significantly deviated from the allowable error range. In response to this, the driver can correct the handle such that the lane 40 fits within the range of the upper side 20U of the sensory guide 20.

In this way, the windshield 10 of this embodiment allows the driver to drive the vehicle while recognizing the relative position of the upper side 20U of the sensory guide 20, such as whether the upper side overlaps with or coincides with the lane 40 on the road surface 39. Accordingly, since it becomes easier to drive the vehicle while maintaining a an almost constant distance from the lane 40, deviation, wobbling, or the like within the vehicle's own traveling lane can be suppressed, and the vehicle can be driven stably.

Further, in the windshield 10 of this embodiment, since the length of the upper side of the sensory guide 20 is longer than the width of the lane 40 seen from the driver, the driver is not forced to stare at a point on the sensory guide 20 and operate the handle to aim at the target. Therefore, since the driver can drive the vehicle stably while keeping the positional relationship between the sensory guide 20 and the lane 40 in his or her field of view while driving as usual, the driver is less likely to feel fatigued.

Therefore, when the windshield 10 of this embodiment is adopted, the driver can naturally grasp the positional relationship between the own vehicle and the road without any discomfort. Therefore, the windshield 10 of this embodiment can contribute to energy efficiency in the field of vehicle safety technology.

Further, in the windshield 10 of this embodiment, the sensory guide 20 has lateral sides 20S extending downward from both ends of the upper side 20U in the vehicle width direction, and the lateral sides 20S are inclined such that the length in the vehicle width direction gradually increases downward from each of the left and right ends of the upper side 20U. Therefore, when the lane 40 on the road surface 39 overlaps with the inclined portion of the lateral side 20S of the sensory guide 20 while the vehicle is being driven, the amount of deviation from the reference area where the lane 40 and the upper side 20U of the sensory guide 20 overlap can be intuitively grasped from the change in height of the overlapping portion of the lateral side 20S and the lane 40. Since the change in the amount of deviation that can be recognized while driving and the change in the scenery seen through the passenger side mirror 12L are linked, when the windshield 10 of this embodiment is adopted, the driver can properly judge the direction and amount of handle (steering) correction by also visually recognizing the passenger side mirror 12L.

Further, in the windshield 10 of this embodiment, the maximum length L2 in the vehicle width direction of each lateral side 20S arranged on both sides of the upper side 20U of the sensory guide 20 is set to half the length L2 of the upper edge. As a result, since the maximum length L2 of the lateral side 20S in the vehicle width direction becomes half of the maximum adjustment width within the reference area (within the area where the lane 40 overlaps with the upper side 20U), it becomes easier for the driver to intuitively grasp the amount of deviation from the reference area.

Further, in the case of this configuration, since the widthwise lengths of the two lateral sides 20S arranged on both sides of the upper side 20U in the vehicle width direction are the same, the sensory guide 20 appears visually stable and is less likely to give a sense of discomfort to the driver who visually recognizes the sensory guide 20.

Furthermore, when this configuration is adopted, the length of the lateral side 20S that allows the driver to recognize the amount of deviation from the reference area is ensured to be sufficiently long (half the length of the maximum adjustment width within the reference area), such that the driver who visually recognizes the sensory guide 20 is less likely to be conscious of hastily trying to align the upper side 20U of the sensory guide 20 with the lane 40. Therefore, the driver can naturally correct the handle (steering wheel 11) while still being able to naturally and visually recognize the forward field of view.

Furthermore, in the windshield 10 of this embodiment, the height H from the lower end to the upper end of the lateral side 20S of the sensory guide 20 is set to be equal to or smaller than the maximum length of the lateral side 20S in the vehicle width direction. As a result, since the lateral sides 20S on both the left and right sides rise gently (at a non-acute angle) toward the upper side 20U, it is less likely that the driver who visually recognizes the sensory guide 20 will be conscious of hastily trying to align the upper side 20U of the sensory guide 20 with the lane.

Therefore, when the windshield 10 of this embodiment is adopted, the driver can naturally correct the handle (steering wheel 11) while still being able to naturally and visually recognize the forward field of view.

Further, in the windshield 10 of this embodiment, the center position o of the sensory guide 20 in the vehicle width direction is set to coincide with the center position OB of the vehicle in the vehicle width direction. Therefore, the driver can recognize the center position OB of the own vehicle in the vehicle width direction from the center position o of the upper side 20U by visually recognizing the upper side 20U of the sensory guide 20.

Therefore, when this configuration is adopted, the driver can operate the handle (steer) while being conscious of the center position OB of the own vehicle in the vehicle width direction.

Furthermore, in this configuration, since the upper side 20U of the sensory guide 20 extends to the left and right by the same length from the center position OB of the own vehicle in the vehicle width direction, the left and right deviation of the own vehicle can be adjusted within the same length range.

Further, in the windshield 10 of this embodiment, the upper side 20U of the sensory guide 20 is set to be located above the upper edge of the front hood portion 30 of the vehicle 1 that is seen from the driver through the windshield body 13. Therefore, when the driver sees the front through the windshield body 13, the intersection between the upper side 20U and the lane 40 on the road surface 39 is not blocked by the front hood portion 30.

Therefore, when this configuration is adopted, the driver can accurately grasp the positional relationship between the lane 40 on the road surface 39 and the own vehicle on the basis of the overlapping position between the upper side 20U of the sensory guide 20 and the lane 40 on the road surface 39.

Furthermore, in the windshield 10 of this configuration, since the intersection between the upper side 20U of the sensory guide 20 and the lane 40 on the road surface 39 is not blocked by the front hood portion 30, when the road surface 39 is brightly illuminated by turning on the headlights at night, the driver can clearly recognize the positional relationship between the upper side 20U and the brightly lit lane 40.

Further, in the windshield 10 of this embodiment, the sensory guide 20 is provided to be continuous with the border 14 on the peripheral edge (lower edge portion 13L) of the windshield body 13. As a result, the sensory guide 20 appears to float within the windshield body 13 (in the forward field of view) and becomes invisible.

Therefore, when the windshield 10 of this configuration is adopted, the driver will not feel any discomfort as if a foreign object is attached to a part of the windshield body 13. Accordingly, it is possible to improve comfort when driving the vehicle.

Further, when the sensory guide 20 is formed integrally with the border 14 or continuously as in this embodiment, the sensory guide 20 can be easily provided on the windshield body 13 together with the border 14.

Furthermore, the present invention is not limited to the above-described embodiment, and various design modifications are possible without departing from the spirit of the invention. For example, in the above-described embodiment, the sensory guide 20 is provided to be continuous with the border 14 of the lower edge portion 13L, but the sensory guide 20 may be structured to be spaced apart from the border 14.

Further, in the above-described embodiment, the center position o of the sensory guide 20 in the vehicle width direction is set to coincide with the center position OB of the vehicle in the vehicle width direction, but the sensory guide 20 may also be disposed such that its center position o in the vehicle width direction is deviated from the center position OB in the vehicle width direction.

Furthermore, in this case, it is desirable that the upper side 20U and the left and right lateral sides 20S of the sensory guide 20 are line-symmetrical with respect to a vertical line passing through the center position in the width direction of the upper side 20U.

Further, in the above-described embodiment, the lateral side 20S of the sensory guide 20 is inclined outward in the vehicle width direction, but the lateral side 20S may be shaped to extend linearly downward without being inclined.

Further, in the above-described embodiment, the sensory guide 20 is printed on the windshield body 13 together with the border 14, but the sensory guide 20 may be formed in a sheet shape and adhered to the surface of the windshield body 13. Furthermore, the sensory guide 20 may have a three-dimensional shape with a thickness in the front and rear direction.

### REFERENCE SIGNS LIST

1: Vehicle
10: Windshield
13: Windshield body
14: Border
20: Sensory guide
20U: Upper side
20S: Lateral side
30: Front hood portion
39: Road surface
40: Lane

## Claims

1. A vehicle windshield comprising:
a windshield body; and
a sensory guide which is disposed in a lower area of the windshield body and allows a driver to sense a relative position of a vehicle with respect to an outside surroundings,
wherein the sensory guide has an upper side which extends along a vehicle width direction, and
wherein the upper side is provided such that when the upper side overlaps with a lane on a road surface seen from the driver, the length is longer than the width of the lane in the vehicle width direction.

2. The vehicle windshield according to claim 1,
wherein the sensory guide has lateral sides which extend downward from both ends in the vehicle width direction of the upper side, and
wherein the lateral sides are inclined such that the length in the vehicle width direction gradually increases downward from the end of the upper side.

3. The vehicle windshield according to claim 2,
wherein the maximum length in the vehicle width direction of the lateral sides arranged on both sides of the upper side in the vehicle width direction is set to half the length of the upper side.

4. The vehicle windshield according to claim 2,
wherein the height from a lower end to an upper end of the lateral side is set to be equal to or smaller than the maximum length of the lateral side in the vehicle width direction.

5. The vehicle windshield according to any one of claims 1 to 4,
wherein the sensory guide is disposed such that a center position of the sensory guide in the vehicle width direction coincides with a center position of the vehicle in the vehicle width direction.

6. The vehicle windshield according to any one of claims 1 to 4,
wherein the sensory guide is disposed such that the upper side is located above an upper edge of a front hood portion of the vehicle seen from the driver through the windshield body.

7. The vehicle windshield according to any one of claims 1 to 4,
wherein a peripheral edge portion of the windshield body is provided with a border which frames the peripheral edge portion, and
wherein the sensory guide is provided to be continuous with the border.
